(19) Europäisches Patentamt

European Patent Office

Office européen des brevets

(11) **EP 1 612 958 A1**

(12) **EUROPEAN PATENT APPLICATION**
published in accordance with Art. 158(3) EPC

(43) Date of publication:
**04.01.2006 Bulletin 2006/01**

(51) Int Cl.:
**H04B 1/707** (1995.01)

(21) Application number: **04726790.1**

(22) Date of filing: **09.04.2004**

(86) International application number:
**PCT/JP2004/005113**

(87) International publication number:
**WO 2004/093340 (28.10.2004 Gazette 2004/44)**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **14.04.2003 JP 2003109513**

(71) Applicant: **MATSUSHITA ELECTRIC INDUSTRIAL CO., LTD.**
**Kadoma-shi, Osaka 571-8501 (JP)**

(72) Inventor: **MAEDA, Masahiko**
**Kanagawa 238-0021 (JP)**

(74) Representative: **Grünecker, Kinkeldey, Stockmair & Schwanhäusser Anwaltssozietät**
**Maximilianstrasse 58**
**80538 München (DE)**

(54) **CORRELATION VALUE CALCULATION CIRCUIT**

(57)     Multiplying circuits 101 to 105, storage circuits 111 to 115, first selection circuits 131 to 135, adding circuits 121 to 125 and second selection circuits 141 to 145 arranged on 16-stage data paths constitute calculation circuits to execute correlation processing on respective data paths. 16-bit codes that are basic structures of a PSC and SSC generated in code generating circuit 170 as despreading codes are constant in repetition characteristics of positive bits and negative bits, and it is thus possible to execute the correlation processing on received data with a one-chip mutual shift in sixteen calculation circuits. It is thereby possible to execute the correlation processing at desired timings in the first step, second step and third step processing.

FIG.5

EP 1 612 958 A1

**Description**

Technical Field

The present invention relates to a correlation value calculating circuit used in the three-step cell search adopted in W-CDMA (Wideband Code Division Multiple Access) communication systems.

Background Art

Generally, communication is performed in formats determined in advance between transmission and reception sides, and it is necessary to detect the slot timing of a receiving signal to receive the signal properly. Particularly, in W-CDMA, the reception side cannot decode information without knowing the spreading code and its timing, and so detecting the timing and identifying the spreading code is extremely important.

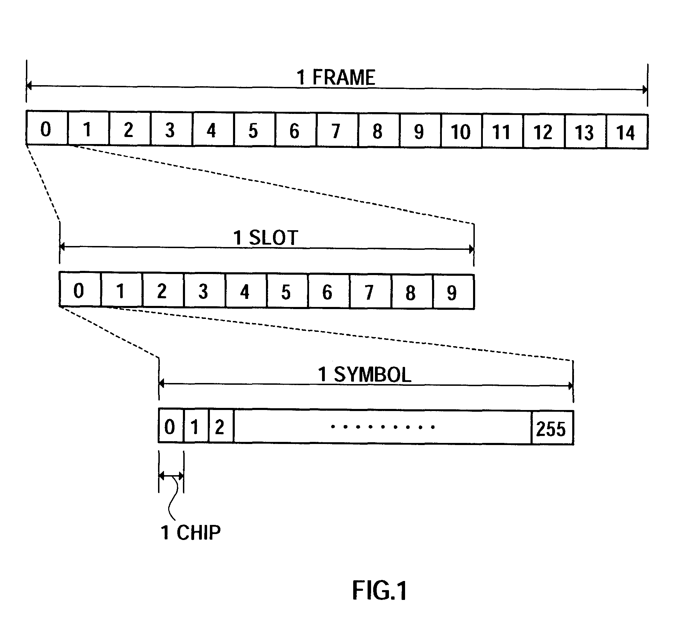

FIG.1 illustrates a format of data on a downlink channel that is a channel from a base station to a terminal station. In FIG. 1, one frame is comprised of fifteen slots. One slot is comprised of ten symbols. One symbol is comprised of 256 chips. This one chip is the minimum unit of data.

Further, on the downlink channel from a base station to a terminal station, a long code having the same period as a frame and a short code having a shorter period than the long code are used, and data is spread by the product of the long code and short code. Then, in order to detect the slot timing in the terminal station, the beginning symbol of a slot is spread with only a known short code.

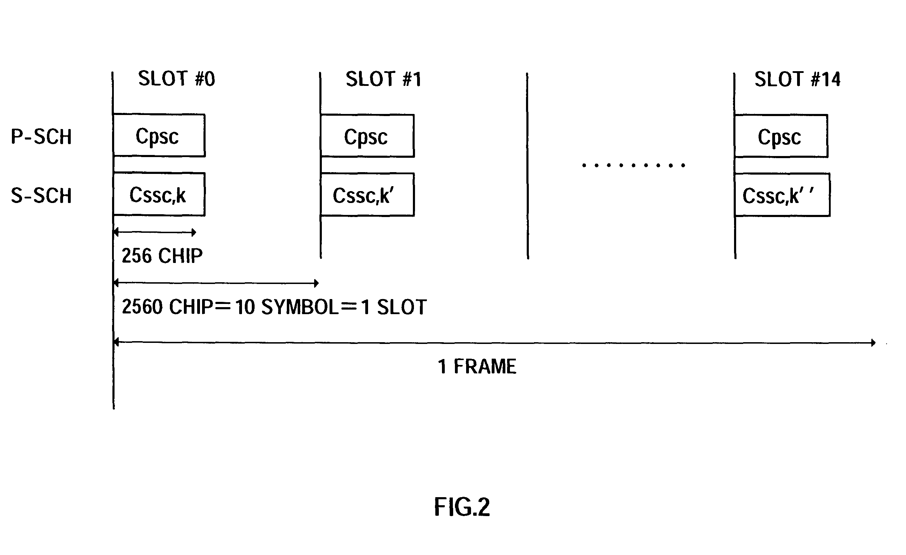

FIG. 2 illustrates the beginning symbol of each slot spread with a known short code. Physical channels include a primary synchronization channel (P-SCH) and a secondary synchronization channel (S-SCH). As shown in FIG.2, on the P-SCH, the beginning symbol in each slot is spread with a common primary synchronization code (PSC) represented by CPSC. On the S-SCH, the beginning symbol of each slot is spread with any one of sixteen types of secondary synchronization codes (SSC) represented by CSSC, k(k=0~15). In this case, it is assumed in FIG.2 that k, k' ,..., k" is set between 0 and 15.

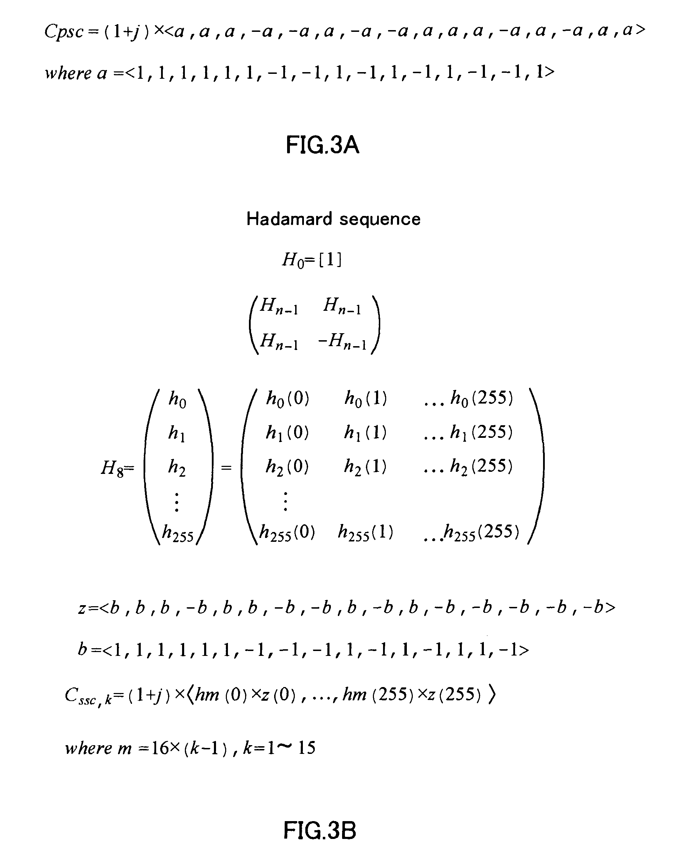

In addition, FIG.3A illustrates a method of generating the PSC, and FIG.3B illustrates a method of generating the SSC. As shown in FIG.3A, the PSC is comprised of sixteen codes a, where the sixteen codes a are arranged and being inverted positive and negative every predetermined number. As shown in FIG. 3B, the SSC is comprised of sixteen types of codes generated from the sixteen times of multiplication of one of every sixteen lines of Hadamard sequence by z. z is comprised of sixteen codes b, as shown in FIG. 3B, where predetermined numbers of positive codes b and negative codes b constitute a 16-code-b line.

As a method of timing detection and spreading code identification, the three-step cell search method is known. In first step processing, correlation is calculated with the PSC to detect slot timing. In second step processing, correlation with the SSC and correlation with frame timing is calculated to detect the frame timing and identify a scrambling code group. In third step processing, correlation is calculated with the scrambling codes belonging to the scrambling code group identified in the second step processing to identify a scrambling code, that is, the spreading code.

For slot timing detection, it is necessary to assume a given timing out of data transmitted from a base station asynchronously as a tentative slot timing, and, from this timing, to generate a profile over minimum one slot one after starting the first step processing. It is achieved by determining correlation with the PSC 2, 560 times using a 256-tap matched filter. The calculation result of the matched filter is expressed by following equation (1). Note that in the equation (1), m takes values ranging from 0 to 2559.

$$MFOUT_{PSC}(m) = \sum_{n=0}^{255} C_{PSC}(n) \cdot data(n+m) \quad \ldots\ldots (1)$$

In addition, detection of the frame timing is achieved by determining correlation with the SSC on the slot timing detected in the method described above using a 256-tap matched filter. The calculation result of the matched filter is expressed by following equation (2). Note that in equation (2), m' takes values ranging from 0 to 2559.

$$MFOUT_{SSC}(m', k) = \sum_{n=0}^{255} C_{SSC,k}(n) \cdot data(n+m') \quad \ldots\ldots (2)$$

In addition, the scrambling code is identified also using the matched filter as in the following equation (3). Note that in equation (3), m" takes values ranging from 0 to 38,399.

$$MFOUT scramb(m'') = \sum n = n'^{n'+255} Cscramb(n) \cdot data(n+m'')$$

…… (3)

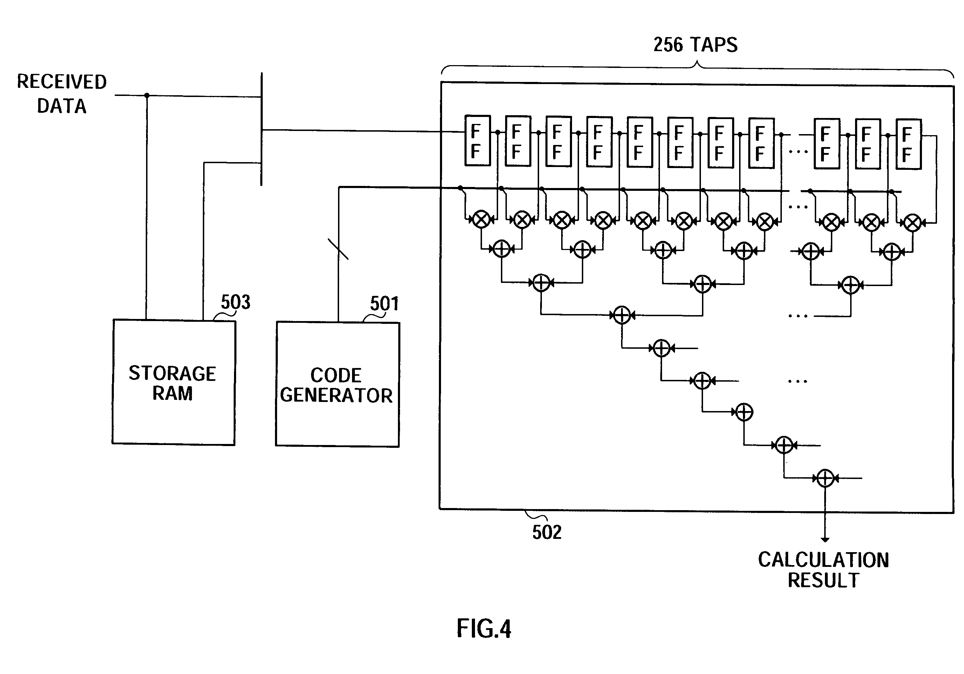

FIG.4 is a block diagram illustrating a configuration example of a conventional correlation value calculatingcircuit. As shown in FIG. 4, the conventional correlation value calculating circuit obtains in a 256-tap matched filter 502 the correlation of received data with a code used in the three-step cell search generated in code generator 501.

The processing in the second and the third step of the three-step cell search generally executes processing at a plurality of timings because of multipath, noise and the like. The matched filter 502 is simple in a circuit structure but is large in a circuit scale because of the 256-tap structure, and is allowed to have only one system.

Therefore, when it is necessary to calculate the correlation with a plurality of codes at a plurality of timings in the second step processing and the third step processing, storage RAM 503 is provided to store received data of the plurality of timings.

However, in the conventional correlation value calculating circuit, as shown in FIG.4, the matched filter 502 is simple in circuit structure but is very large in circuitscalebecauseofthe256-tapstructure. Further, since the storage RAM is required, the circuit scale becomes larger.

Moreover, in the matched filter 502, an extremely large number of calculating circuits to obtain the correlation are provided on data paths, and operate concurrently every calculation to obtain the correlation, resulting in a problem that power consumption is significantly high.

Disclosure of Invention

The present invention is aimed at solving the above-mentioned problems, and it is an object of the invention to provide a correlation value calculating circuit enabling the correlation to be obtained without using a matched filter and storage RAM that increase the circuit scale.

According to one aspect of the invention, a correlation value calculating circuit has a 16-stage multiplier that determines a product of received data and a despreading code, a 16-stage first storage which adds a result of the calculation in the multiplier and data held therein and newly holds a result of the addition, a 16-stage first selector that selects either data from the first storage or data obtained by inverting a polarity of the data from the first storage according to a spreading code, a second storage that holds data of 256 samples, a 16-stage second selector that selects the data held in the second storage or zero, a 16-stage adder that determines a sum of the data selected and output from the first selector and the data selected and output from the second selector, a third selector that selects one of results of addition in the 16-stage adder to output to the second storage, and a code generator which generates a 16-bit code that is a first basic structure of a primary synchronization code, another 16-bit code that is a first basic structure of a secondary synchronization code, and a scrambling code as despreading codes to provide to the 16-stage multiplier, and further generates a 16-bit code that is a second basic structure of the primary synchronization code, another 16-bit code that is a second basic structure of the secondary synchronization code, and a fixed value as spreading codes to provide to the 16-stage first selector.

Brief Description of Drawings

FIG. 1 is a diagram illustrating a conventional data format on a downlink channel;
FIG.2 is a diagram illustrating a beginning symbol of each slot spread with a conventional known short code;
FIG. 3A is a diagram explaining a conventional method of generating a PSC;
FIG. 3B is a diagram explaining a conventional method of generating SSCs;
FIG.4 is a block diagram illustrating a configuration example of a conventional correlation value calculating circuit; and
FIG.5 is a block diagram illustrating a configuration of a correlation value calculating circuit according to one Embodiment of the invention.

Best Mode for Carrying Out the Invention

An Embodiment of the present invention will specifically be described below with reference to the accompanying drawings. Note that the present invention is not limited to the Embodiment, and can be carried into practice in various modifications without departing from the scope of the invention.

A gist of the invention is to reduce a calculating circuit and storage RAM using characteristics of the code structures of the PSC and the SSC. The code structures of the PSC and the SSC used in the invention will be described below with reference to FIG.3.

As shown in FIG.3A, the PSC is comprised of sixteen codes a, where the sixteen codes a are arranged and being inverted positive and negative every predetermined number. In other words, the codes a of 16 bits constituting the PSC appear in positive state or negative state repeatedly according to a given rule, and the repetition characteristic is constant. Therefore, the characteristic makes it possible to recognize that one-chip shift is caused by difference in timing In the processing of correlation with the PSC in the first step of the three-step cell search, using such a characteristic enables reduction in the calculating circuit on the data path.

As shown in FIG. 3B, the SSC is comprised of sixteen types of codes, each generated by multiplying one of the sixteen-row components of Hadamard sequence H8 by z. z is comprised of sixteen codes b, as shown in FIG. 3B, where the sixteen codes b are arranged and being inverted positive and negative every determined number.

Then, in components hm (0) to hm(255) of each row of Hadamard sequence H8, assuming that components of the first row of Hadamard sequence H4 are h' 0 (0) to H'0(15), hm(0) to hm(15), hm(16) to hm(31), hm(32) to hm(47),..., and hm(250) to hm(255) are comprised of sixteen h'0(0) to h'0(15), where the sixteen h'0(0) to h'0(15) are arranged and being inverted positive and negative every predetermined number Accordingly, the components of the SSC have a structure where sixteen b(0)xh'0(0) to b (15) ×h' 0 (15) are arranged and being inverted positive and negative every predetermined number. In other words, similar to the PSC, the 16-bit codes constituting the SSC appear in positive state or negative state repeatedly according to a given rule, and the repetition characteristic is constant. Therefore, the characteristic makes it possible to recognize that one-chip shift is caused by difference in timing. In the processing of correlation with the SSC in the second step of the three-step cell search, the characteristic makes it possible to eliminate storage RAM.

The Embodiment of the invention will be described below in detail with reference to the accompanying drawings.

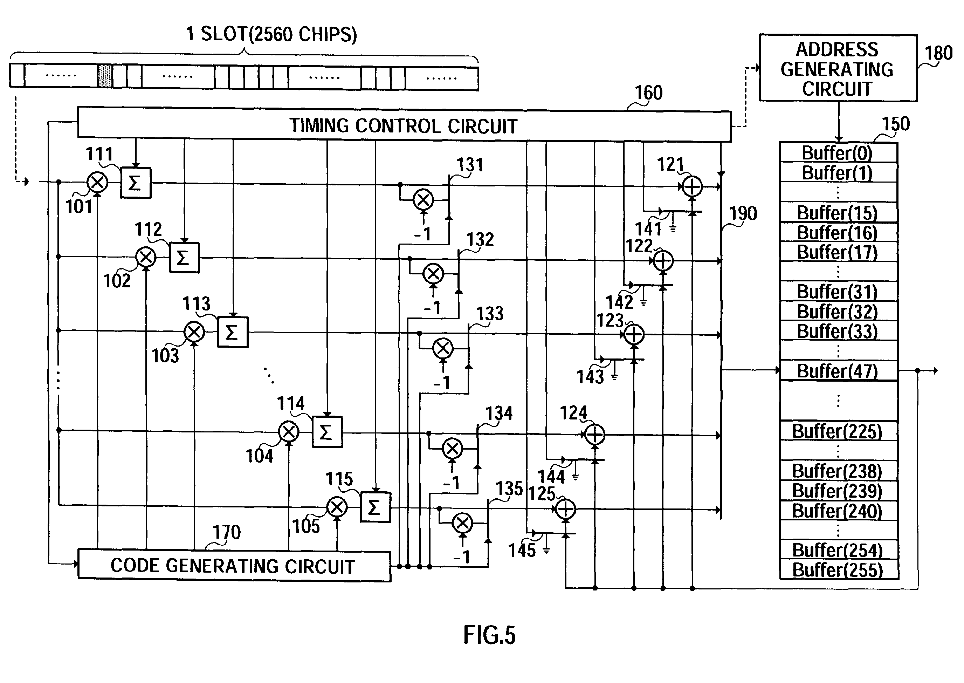

FIG.5 is a block diagram illustrating a configuration of a correlation value calculating circuit according to an embodiment of the invention. The correlation value calculating circuit as shown in FIG. 5 has 16-stage multiplying circuits 101, 102, 103, .., 104 and 105, 16-stage storage circuits 111, 112, 113, .. , 114 and 115, 16-stage adding circuits, 121, 122, 123, .. , 124 and 125, 16-stage first selection circuits 131,132,133,..,134 and 135, 16-stage second selection circuits 141, 142, 143, .. , 144 and 145, RAM 150 capable of holding data of 256 samples, timing control circuit 160, code generating circuit 170, address generating circuit 180 that generates an address of RAM 150, and third selection circuit 190.

Timing control circuit 160 generates a timing signal to control the operation of each circuit. As despreading codes to provide to the 16-stage multiplying circuits 101, 102, 103,..,104 and 105, code generating circuit 170 generates a 16-bit code that is the first basic structure of the PSC as shown in FIG.3A in the first step processing, another 16-bit code that is the first basic structure of the SSC as shown in FIG.3B in the second step processing, and a scrambling code not shown in the figure in the third step processing.

Further, as spreading codes to be provided to 16-stage first selection circuits 131, 132, 133,..,134 and 135, code generating circuit 170 generates a 16-bit code that is a second basic structure of the PSC as shown in FIG.3A in the first step processing, another 16-bit code that is a second basic structure of the SSC as shown in FIG. 3B in the second step processing, and a fixed value in the third step processing.

Each of 16-stage multiplying circuits 101,102,103,..,104 and 105 determines the product of received data and the despreading code from code generating circuit 170.
16-stage storage circuits 111, 112, 113, .. , 114 and 115 add respective results of calculation in 16-stage multiplying circuits 101, 102, 103, .., 104 and 105 and data held therein, and hold the new addition results.

According to the spreading codes from code generating circuit 170, 16-stage first selection circuits 131, 132, 133, .. , 134 and 135 output data held in 16-stage storage circuits 111, 112, 113,..,114 and 115 without change or with inverting the polarity of the data. 16-stage second selection circuits 141,142,143,..,144 and 145 select either an output of RAM 150 or "0" to output.

16-stage adding circuits 121, 122, 123,..,124 and 125 add values selected in 16-stage first selection circuits 131, 132, 133, .., 134 and 135 and values selected in 16-stage second selection circuits 141, 142, 143, .. , 144 and 145.
Third selection circuit 190 selects among outputs of 16-stage adding circuits 121, 122, 123, .., 124 and 125 to stores in RAM 150.

Described below is each step of the three-step cell search performed in the correlation value calculating circuit configured as described above. Note that the processing operation is the same in each stage of sixteen stages, and so the data path of the first stage will be explained below as an example. One slot of received data is comprised of 2,560 chips as shown in FIG. 1.

In the processing in the first step, code generating circuit 170 generates sixteen bits of the code a constituting the PSC as shown in FIG.3A on a bit-by-bit basis sequentially as a despreading code to multiply by the received data in multiplying circuit 101. Accordingly, multiplying circuit 101 obtains the product of the received data and each bit of the code a sequentially.

Storage circuit 111 obtains the sum of a calculation result in multiplying circuit 101 and data held in storage circuit 111, and holds the obtained sum again repeatedly corresponding to 16 bits of the code a. Then, storage circuit 111 determines the sum of products of all the sixteen bits of the code a and the received data and outputs the product sum data to adding circuit 121 via first selection circuit 131.

Thus obtained product sum data represents a correlation value of the first sixteen chips in the received data, that is a result of correlation with CPSC (0) to CPSC (15) at some timing, a correlation value of subsequent sixteen chips, that is. a result of correlation with CPSC (16) to CPSC (31) at some timing, a correlation value of subsequent sixteen chips, that is. a result of correlation with CPSC (32) to CPSC (47) at some timing, or a correlation value of last sixteen chips, that is a result of correlation with CPSC (240) to CPSC (255) at some timing, in calculating the correlation with the PSC.

At each aforementioned timing, the code "a" shows a repetition characteristic in which positive code "a" and negative code "-a" repeats corresponding to each timing.

Therefore, code generating circuit 170, when storage circuit 111 provides the product sum data to adding circuit 121, determines which of the above-mentioned timing that performs correlation processing according to the repetition characteristic of code a, generates a spreading code indicating whether the product sum data is provided without change or with positive and negative being inverted and provides the spreading coed to first selection circuit 131.

In this example, since the correlation processing is the first step, the timing to calculate the correlation values of first sixteen chips in the received data, that is, correlation with CPSC (0) to CPSC (15). Accordingly, code generating circuit 170 generates a spreading code to "provide the data without change" at the timing of first sixteen chips, and in the other cases generates a spreading code to "provide the data with inverting positive and negative".

As a result, first selection circuit 131 outputs the product sum data from storage circuit 111 which is multiplied by "-1" to the one side of an input terminal of adding circuit 121 directly when the spreading code from code generating circuit 170 is to "provide the data without change, " while multiplying the product sum data from storage circuit 111 multiplied by "-1" to output to the one side of an input terminal of adding circuit 121 when the spreading code is to "provide the code while inverting the polarity."

An output of second selection circuit 141 is provided to the other input terminal of adding circuit 121. Second selection circuit 141 selects "0" when data output from first selection circuit 131 is a result of correlation with CPSC (0) to CPSC (15), while selecting output data of RAM 150 in the other cases.

As a result, when the product sum data output from first selection circuit 131 is a result of correlation with CPSC (0) to CPSC (15), adding circuit 121 receives the data without change from second selection circuit 141 and stores the value output from first selection circuit 131 in RAM 150 via third selection circuit 190.

Meanwhile, when the product sum data output from first selection circuit 131 represents a correlation result that does not match with any of correlation with CPSC (0) to CPSC (15), adding circuit 121 receives from second selection circuit 141 data about a location stored in RAM 150 corresponding to the timing of the product sum data output from first selection circuit 131, and obtains the sum of these two of data to store in the location from which the data of RAM 150 is received via third selection circuit 190.

In other words, third selection circuit 190 selects an output of each of adding circuits 121 to 125 to store in a corresponding storage location in RAM 150. The aforementioned operation is performed for respective storage locations associated with sixteen timings in RAM 150. The correlation of the PSC with the code length of 256 and 256-chip received data is thus calculated. In addition, power calculation is executed when the correlation value with the PSC is obtained, but this is not the direct matter of the invention, and therefore descriptions thereof are omitted.

In the first stage, as described above, the correlation with the PSC is calculated in RAM 150 via multiplying circuit 101, storage circuit 111, first selection circuit 131, adding circuit 121 and second selection circuit 141, but the correlation of every sixteen chips is only calculated on this data path.

Therefore, as the second stage, multiplying circuit 102, storage circuit 112, first selection circuit 132, adding circuit 122 and second selection circuit 142 are provided to calculate the correlation of the data with a one-chip shift with the PSC in the above-mentionedmethod. As the third stage, multiplying circuit 103, storage circuit 113, first selection circuit 133, adding circuit 123 and second selection circuit 143 are provided to calculate the correlation of data with a two-chip shift with the PSC. The similar manner is continued thereafter, and as the sixteenth stage, multiplying circuit 105, storage circuit 115, first selection circuit 135, adding circuit 125 and second selection circuit 145 are provided to calculate the correlation of data with a fifteen-chip shift with the PSC. It is thereby possible to calculate the correlation of the data with the PSC at all the timings without using a 256-tap matched filter.

Next, in processing in the second step, the correlation is calculated between the received data and each of sixteen types of SSCs (Cssc, 0 to Cssc, 15). Code generating circuit 170 generates sixteen bits of a code "b(0)x'0(0) to b (15) ×h'0(15)" constituting a SSC as shown in FIG.3B on a bit-by-bit basis sequentially, as a despreading code to multiply by the received data in multiplying circuit 101. Accordingly, multiplying circuit 101 obtains the product of the received data and each bit of the code "b (0) xh'0(0) to b(15) xh'0(15)" sequentially.

When obtaining the sum of products of the received data and code "b (0) × h' 0 (0) to b(15) × h' 0 (15) ", multiplying circuit 101 outputs the data to first selection circuit 131. According to the spreading code from code generating circuit 170, first selection circuit 131 determines whether or not to invert the polarity of the data corresponding to the code of the SSC to be obtained, and outputs the data to adding circuit 121.

Adding circuit 121, when a result of a data transmitted from first selection circuit 131 is the result other than the correlation result to the first sixteen chips, receives a data of a location stored in RAM 150 corresponding to the SSC (Cssc, 0 to Cssc,15) to obtain correlation with data transmitted from first selection circuit 131, obtains the sum of these tow data and stores the result where data of RAM 150 is received.

In this way, the correlation of the 256-chip received data with sixteen types of SSC (Cssc, 0 to Cssc,15) with the 256-code length is calculated from some timing in multiplying circuit 101, storage circuit 111, adding circuit 121, first selection circuit 131 and second selection circuit 141 that are a first-stage system to calculate the correlation.

Generally, in the processing in the second step, it is necessary to perform the processing on a plurality of timings, and with respect to other timings, the correlation can be calculated in second-stage to sixteenth-stage systems (multiplying circuit 102, storage circuit 112, first selection circuit 132, adding circuit 122 and second selection circuit 142, multiplying circuit 103, storage circuit 113, first selection circuit 133, adding circuit 123 and second selection circuit 143, ..., and multiplying circuit 105, storage circuit 115, first selection circuit 135, adding circuit 125 and second selection circuit 145). It is thus possible to calculate the correlation with the SSC (Cssc, 0 to Cssc,15) for maximum sixteen timings.

Sixteen stages are thus provided as systems to calculate the correlation at a plurality of timings, thereby eliminating the need of storage RAM to store received data, which is necessary in the case of using a matched filter having only one system for correlation calculation.

Finally, in the processing in the third step, the correlation is calculated with eight scrambling codes belonging to a scrambling code group identified in the second step. For calculating the correlation of a 256-length scrambling code and 256-chip received data, one stage of the system comprising of 16stages for obtaining correlation.

A case of using the first stage will be described below as one example. Multiplying circuit 101 calculates the correlation of the received data with each bit of a scrambling code generated in code generating circuit 170 to output the result to storage circuit 111. When obtaining correlation values of 256 bits of the scrambling code and 256 chips of the received data, storage circuit 111 provides the values to the selection circuit 131.

Since adding circuit 121 calculates the correlation of 256 chips, first selection circuit 131 always selects a correlation value for adding circuit 121 according to the spreading code from code generating circuit 170 to provide to this correlation value to adding circuit 121. Similarly, since the correlation values of 256 chips of the received data are obtained in storage circuit 111, second selection circuit 141 always selects "0".
Accordingly, adding circuit 121 outputs the value of
Third selection circuit 190 selects an output of adding circuit 121 to be stored in RAM 150.

Correlation values with eight scrambling codes can be obtained in a similar manner in the systems to calculate the correlation from the first to eight stages. There are sixteen stages in the systems to calculate the correlation, and it is thus possible to calculate the correlation of received data at maximum two timings with the scrambling codes.

Thus, according to the present embodiment, it is possible to calculate the correlation with spreading codes without performing approximation processing or using a 256-tap matched filter and storage RAM. Further, the calculating circuitry on data paths can be reduced largely as compared with the 256-tap matched filter.

This application is based on Japanese Patent Application No. 2003-109513, filed on April 14, 2003, entire content of which is expressly incorporated by reference herein.

Industrial Applicability

The present invention makes it possible to calculate correlation without using a matched filter and storage RAM that increase the circuit scale and to reduce the circuit scale and suppress power consumption in correlation calculation.

**Claims**

1. A correlation value calculating circuit comprising:

a 16-stage multiplier that determines a product of received data and a despreading code;
a 16-stage first storage that adds a result of calculation in the multiplier and data held in the 16-stage first storage and newly holds a result of addition;
a 16-stage first selector that selects one of data from the first storage and data obtained by inverting a polarity of said data from the first storage according to a spreading code and outputs the selected data;
a second storage that holds data of 256 samples;

a 16-stage second selector that selects one of the data held in the second storage and zero;

a 16-stage adder that determines a sum of the data selected and output from the first selector and the data selected and output from the second selector;

a third selector that selects one of results of addition in the 16-stage adder and outputs the result to the second storage; and.

a code generator that generates a 16-bit code that is a first basic structure of a primary synchronization code, another 16-bit code that is a first basic structure of a secondary synchronization code, and a scrambling code as despreading codes to provide to the 16-stage multiplier, and further generates a 16-bit code that is a second basic structure of the primary synchronization code, another 16-bit code that is a second basic structure of the secondary synchronization code, and a fixed value as spreading codes to provide to the 16-stage first selector.

FIG.1

EP 1 612 958 A1

FIG.2

EP 1 612 958 A1

$$Cpsc = (1+j) \times \langle a, a, a, -a, -a, a, -a, -a, a, a, a, -a, a, -a, a, a \rangle$$

$$where\ a = \langle 1, 1, 1, 1, 1, 1, -1, -1, 1, -1, 1, -1, 1, -1, -1, 1 \rangle$$

## FIG.3A

### Hadamard sequence

$$H_0 = [1]$$

$$\begin{pmatrix} H_{n-1} & H_{n-1} \\ H_{n-1} & -H_{n-1} \end{pmatrix}$$

$$H_8 = \begin{pmatrix} h_0 \\ h_1 \\ h_2 \\ \vdots \\ h_{255} \end{pmatrix} = \begin{pmatrix} h_0(0) & h_0(1) & \dots h_0(255) \\ h_1(0) & h_1(1) & \dots h_1(255) \\ h_2(0) & h_2(1) & \dots h_2(255) \\ \vdots & & \\ h_{255}(0) & h_{255}(1) & \dots h_{255}(255) \end{pmatrix}$$

$$z = \langle b, b, b, -b, b, b, -b, -b, b, -b, b, -b, -b, -b, -b, -b \rangle$$

$$b = \langle 1, 1, 1, 1, 1, 1, -1, -1, -1, 1, -1, 1, -1, 1, 1, -1 \rangle$$

$$C_{ssc,k} = (1+j) \times \langle hm(0) \times z(0), \dots, hm(255) \times z(255) \rangle$$

$$where\ m = 16 \times (k-1),\ k = 1 \sim 15$$

## FIG.3B

256 TAPS

CALCULATION RESULT

502

501

CODE GENERATOR

503

STORAGE RAM

RECEIVED DATA

FIG.4

FIG.5

| INTERNATIONAL SEARCH REPORT | International application No. |
|---|---|
| | PCT/JP2004/005113 |

**A. CLASSIFICATION OF SUBJECT MATTER**
Int.Cl⁷ H04B1/707

According to International Patent Classification (IPC) or to both national classification and IPC

**B. FIELDS SEARCHED**

Minimum documentation searched (classification system followed by classification symbols)
Int.Cl⁷ H04B1/69-1/713, H04J13/00-13/06, H04L7/00

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2002-57602 A (Motorola, Inc.), 22 February, 2002 (22.02.02), Par. Nos. [0005] to [0012]; Fig. 3 (Family: none) | 1 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 June, 2004 (04.06.04) | 22 June, 2004 (22.06.04) |

| Name and mailing address of the ISA/ | Authorized officer |
|---|---|
| Japanese Patent Office | |
| Facsimile No. | Telephone No. |

Form PCT/ISA/210 (second sheet) (January 2004)